# FASCICULE DE BREVET EUROPEEN

(11) **EP 3 970 227 B1**
(45) Date de publication et mention de la délivrance du brevet: **07.06.2023**
(21) Numéro de dépôt: 20724150.6
(22) Date de dépôt: 12.05.2020
(51) Int. Cl.: H01M 10/625, H01M 10/655, H01M 10/6556, H01M 10/6569, H01M 10/613, F28F 3/12, F28D 1/03

(54) **DISPOSITIF DE REFROIDISSEMENT D'UN SYSTEME DE STOCKAGE ÉLECTRIQUE ET PROCÉDÉ METTANT EN OUVRE LE DISPOSITIF DE REFROIDISSEMENT**
KÜHLVORRICHTUNG EINES ELEKTRISCHEN SPEICHERSYSTEMS UND VERFAHREN UNTER VERWENDUNG DER KÜHLVORRICHTUNG
COOLING DEVICE OF AN ELECTRICAL STORAGE SYSTEM AND METHOD USING THE COOLING DEVICE

(30) Priorité: 15.05.2019 FR 1905092
(43) Date de publication de la demande: 23.03.2022
(73) Titulaire: VALEO SYSTEMES THERMIQUES, 78320 Le Mesnil Saint-Denis (FR)
(72) Inventeur: MAMMERI, Amrid, 78322 Le Mesnil-Saint-Denis Cedex (FR); AZZOUZ, Kamel, 78322 Le Mesnil-Saint-Denis Cedex (FR); GARNIER, Sébastien, 78322 Le Mesnil-Saint-Denis Cedex (FR)
(74) Mandataire: Valeo Systèmes Thermiques
(86) Numéro de dépôt international: PCT/EP2020/063230
(87) Numéro de publication internationale: WO 2020/229494

(56) Documents cités:
- CN-A- 101 534 627
- CN-U- 203 279 429
- US-A- 5 943 211
- US-B2- 8 486 553

## Description

La présente invention se situe dans le domaine des dispositifs de traitement thermique des systèmes de stockage électrique d'un véhicule automobile, et concerne plus particulièrement un dispositif de refroidissement d'éléments de batterie susceptibles de s'échauffer. La présente invention a aussi pour objet un procédé mettant en oeuvre le dispositif de refroidissement.

Dans le domaine des véhicules automobiles, des dispositifs de traitement thermique permettent de modifier une température d'une batterie électrique, et notamment de diminuer la température de la batterie électrique, qui tend à s'échauffer au cours de son utilisation. D'une manière générale, de tels dispositifs de traitement thermique de batteries électriques font appel à des échangeurs de chaleur. Les différentes cellules de batterie d'un système de stockage électrique peuvent notamment être refroidies au moyen d'une plaque froide à l'intérieur de laquelle circule un fluide de refroidissement, la plaque étant en contact avec les cellules de batterie à refroidir. Il a pu être constaté que de tels échangeurs de chaleur peuvent conduire à un refroidissement non homogène des batteries électriques d'un même système de stockage électrique, entraînant alors une diminution des performances de ces batteries électriques. Ces dispositifs de traitement thermique présentent en outre une résistance thermique élevée en raison des épaisseurs de matière présentes entre le fluide de refroidissement et les cellules de batterie, l'autre paramètre contribuant à la résistance thermique élevée étant le contact entre les plaques de refroidissement, les interfaces thermiques (PAD) et les surfaces des cellules.

Dans le but d'apporter une réponse à ces différentes problématiques, plusieurs dispositifs sont connus.

On connaît notamment le document FR3o37727 dans lequel un dispositif de refroidissement des batteries électriques de voitures électriques ou hybrides est divulgué. Plus particulièrement, ce document concerne un dispositif de refroidissement des cellules des batteries électriques d'un pack batterie de type lon-Lithium. Il comprend un boitier fermé hermétiquement dans lequel circule un fluide diphasique et une couche d'air. Les cellules de stockage électrique sont partiellement plongées dans le fluide diphasique, de sorte que l'échange thermique entre les cellules et le fluide diphasique soit assuré. Ainsi, le refroidissement des batteries électriques est effectué par immersion des cellules des batteries électriques dans ledit fluide. La réserve du liquide diphasique consiste en une cuve située à l'extérieur du boitier et reliée audit boitier afin de permettre la circulation du fluide diphasique.

Toutefois, l'immersion des cellules de stockage électrique dans un fluide, notamment diélectrique, ne permet pas un refroidissement homogène des cellules. Le document US 8486553 divulgue un dispositif de refroidissement d'une pluralité d'éléments de batterie.

L'invention a pour objectif d'offrir une alternative de refroidissement d'éléments de batterie en palliant les problèmes susmentionnés de l'état de la technique, en proposant un dispositif de refroidissement qui abaisse et homogénéise la température de l'élément de batterie, optimisant alors la durée de vie ainsi que la performance d'un tel élément de batterie, notamment d'un système de stockage électrique pour véhicule automobile.

L'invention porte également sur un procédé de refroidissement d'une pluralité d'éléments de batterie d'un système de stockage électrique mettant en oeuvre le dispositif de refroidissement de la présente invention.

Un dispositif de la présente invention est un dispositif de refroidissement d'une pluralité d'éléments de batterie d'un véhicule automobile.

Selon la présente invention, le dispositif de refroidissement comprend un premier boîtier et une pluralité d'étages d'éléments de batterie disposés dans le premier boîtier. Chaque étage d'éléments de batterie est équipé d'un condenseur pourvu d'un circuit de fluide de refroidissement. Le condenseur est associé à au moins un circuit de fluide diélectrique qui est configuré pour projeter un fluide diélectrique sur les éléments de batterie d'un même étage et un bac de récupération du fluide diélectrique qui est commun à la pluralité d'étages d'éléments de batterie. Le dispositif de refroidissement comprend des moyens de recirculation du fluide diélectrique qui sont pourvus d'une pompe et qui relient le bac de récupération à une arrivée de fluide diélectrique que comprend le circuit de fluide diélectrique.

Les éléments de batterie sont agencés en une superposition étagée, formant une pluralité d'étages d'éléments de batterie, et chaque étage d'élément de batterie peut comporter un ou plusieurs éléments de batterie. De la sorte, le dispositif de refroidissement peut comporter une pluralité d'éléments de batterie réparties en une pluralité de colonnes d'éléments de batterie et une pluralité d'étages, chaque étage d'éléments de batterie étant pourvu d'un condenseur et d'un circuit de fluide diélectrique apte à pulvériser le fluide électrique sur les éléments de batterie de l'étage correspondant. Selon l'invention et quelle que soit la configuration et le nombre d'étage et d'éléments de batterie par étage, le dispositif est configuré de sorte qu'un bac de récupération est à même de recevoir le fluide diélectrique pulvérisé sur chacun des étages d'un ensemble donné d'éléments de batterie, et qu'une pompe est à même d'alimenter en fluide diélectrique en provenance du bac de récupération l'ensemble des circuits de fluide diélectrique permettant la pulvérisation de l'ensemble donné d'éléments de batterie.

Le dispositif de refroidissement comprend avantageusement l'une quelconque au moins des caractéristiques techniques suivantes, prises seules ou en combinaison :
un plateau est disposé dans le premier boîtier pour supporter chacun des étages d'éléments de batterie, chaque plateau étant configuré pour permettre un écoulement par gravité du fluide diélectrique vers le bac de récupération. Cette configuration peut consister en un ou plusieurs trous réalisés dans le plateau ou bien en un passage aménagé entre le plateau et les parois délimitant le premier boîtier, les dimensions du plateau étant alors inférieures à celle du premier boîtier dans le plan du plateau concerné,
au moins un plateau, notamment le plateau inférieur, sur lequel repose un étage d'éléments de batterie, notamment l'étage inférieur, est perforé d'une pluralité d'orifices pour permettre le filtrage du fluide diélectrique vers le bac de récupération,
le condenseur est agencé de manière à présenter un plan incliné par rapport à une position horizontal du dispositif de refroidissement une fois monté dans un véhicule. Avantageusement la paroi principale du condenseur présente un plan incliné par rapport à une position horizontale du dispositif de refroidissement une fois monté dans un véhicule. Ainsi l'écoulement des gouttelettes de fluide diélectrique formées par condensation sur une face dudit condenseur peut être plus facilement contrôlé
le condenseur comprend au moins une paroi principale pourvue de l'arrivée de fluide diélectrique ainsi que d'une arrivée de fluide de refroidissement et d'une sortie de fluide de refroidissement entre lesquelles s'étend le circuit de fluide de refroidissement,
un même côté de la paroi principale est équipé de l'arrivée de fluide diélectrique, de l'arrivée de fluide de refroidissement et de la sortie de fluide de refroidissement, pour faciliter une connectique avec des moyens d'alimentation en fluide de refroidissement et en fluide diélectrique de la paroi principale,
le circuit de fluide de refroidissement s'étend à l'intérieur d'une épaisseur de la paroi principale, et/ou le circuit de fluide diélectrique est formé dans l'épaisseur du condenseur. On entend par un circuit s'étendant à l'intérieur d'une épaisseur ou formé dans l'épaisseur, aussi bien une configuration avec des conduits creusés dans la matière qu'une configuration avec des coques rapportées l'une contre l'autre pour former une paroi du condenseur, au moins l'une des coques étant emboutie pour former un canal dudit circuit,
le circuit de fluide diélectrique est formé au moins partiellement par un conduit réalisé distinctement du condenseur et rapporté sur une face du condenseur, qui est tournée vers une chambre de réception d'au moins un élément de batterie. Le fait de réaliser à part le circuit de fluide diélectrique permet de réaliser dans des matériaux différents et/ou dans des épaisseurs différentes le condenseur et le circuit de fluide de refroidissement, ce qui permet de s'assurer d'une tenue en pression du circuit de fluide diélectrique, sans risque de fuite au niveau du condenseur. Notamment, le circuit de fluide électrique peut consister en un tube en aluminium rapporté sur le condenseur. Avantageusement le conduit est relié fluidiquement à au moins une entrée de fluide diélectrique positionné sur la paroi principale du condenseur, elle-même équipé également de l'arrivée et de la sortie de fluide de refroidissement. Ainsi la connexion avec des moyens d'alimentation en fluide est facilité,
le condenseur comprend une pluralité de parois secondaires, dont une première paroi secondaire latérale qui équipe une première extrémité longitudinale de la paroi principale, une deuxième paroi secondaire latérale qui équipe une deuxième extrémité longitudinale de la paroi principale et une paroi secondaire intermédiaire qui est interposée entre les parois secondaires latérales, la paroi secondaire intermédiaire participant à délimiter avec une partie de la paroi principale et l'une des parois secondaires latérales une chambre de réception d'un élément de batterie d'un des étages d'éléments de batterie.
le circuit de fluide diélectrique s'étend dans l'épaisseur de, ou est rapporté contre, la paroi principale et au moins une paroi secondaire,
au moins une paroi secondaire est équipée d'une pluralité de branches de circulation du fluide diélectrique, de manière à pulvériser le fluide diélectrique sur des hauteurs différentes des éléments de batterie,
le circuit de fluide diélectrique est équipé d'une pluralité de buses de projection, chaque buse de projection étant orientée vers l'un des éléments de batterie,
chaque élément de batterie comprend au moins une cellule de stockage électrique, la ou les cellules de stockage électrique étant directement en regard des parois du condenseur. De la sorte, la projection du fluide diélectrique est dirigée directement sur les cellules de stockage, et le refroidissement par l'intermédiaire du fluide diélectrique peut être plus efficace, au moins pour les cellules de stockage qui reçoivent directement le fluide diélectrique,
chaque élément de batterie comprend un deuxième boîtier logeant au moins une cellule de stockage électrique, le deuxième boîtier s'étendant entre la ou les cellules de stockage et les parois du condenseur. De la sorte, la projection du fluide diélectrique est dirigée directement sur le deuxième boîtier, et le refroidissement des cellules de stockage par l'intermédiaire du fluide diélectrique peut être plus homogène pour l'ensemble des cellules de stockage.

La présente invention porte aussi sur un procédé de mise en oeuvre d'un tel dispositif de refroidissement, le procédé comprenant une étape de pulvérisation du fluide diélectrique vers des étages d'éléments de batterie, une étape d'évaporation du fluide diélectrique au contact des éléments de batterie, une étape de condensation du fluide diélectrique au contact du condenseur, une étape de récupération du fluide diélectrique condensé au niveau de chaque étage à l'intérieur du bac de récupération commun à la pluralité d'étages et une étape de recirculation du fluide diélectrique vers chaque circuit de fluide diélectrique équipant un étage correspondant d'éléments de batterie.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue en perspective d'une coupe d'un système de stockage électrique équipé d'un dispositif de refroidissement d'éléments de batterie conforme à la présente invention,
[Fig.2] illustre une vue de face de la coupe du système de stockage représentée sur la figure 1,
[Fig.3] illustre une vue en perspective partielle du système de stockage illustré sur les figures 1 et 2, un premier boîtier étant notamment retiré pour rendre bien visible le dispositif de refroidissement et pour illustrer schématiquement une conduite de recirculation et une pompe du dispositif de refroidissement,
[Fig.4] illustre une vue en perspective d'une première variante d'éléments de batterie susceptibles d'être refroidis par le dispositif de refroidissement représenté sur les figures 1 à 3,
[Fig.5] illustre une vue en perspective d'une deuxième variante d'éléments de batterie susceptibles d'être refroidis par le dispositif de refroidissement représenté sur les figures 1 à 3,
[Fig.6] illustre une vue en perspective d'un condenseur constitutif d'une variante de réalisation du dispositif de refroidissement représenté sur les figures 1 à 3 et destiné à refroidir les éléments de batterie illustré sur la figure 4 ou 5,
[Fig.7] illustre une vue en perspective du condenseur illustré sur la figure 6,
[Fig.8] illustre une vue schématique du condenseur illustré sur les figures 6 et 7, pour rendre visibles les canaux de circulation de fluide diélectrique présents dans l'épaisseur du condenseur,
[Fig.9] illustre une vue en perspective éclatée du condenseur illustré sur les figures 6 à 8,
[Fig.10] illustre une variante de réalisation du condenseur illustré sur les figures 6 à 8, avec un circuit de fluide diélectrique réalisé distinctement et rapporté sur le condenseur,
[Fig.11] illustre une autre variante de réalisation du condenseur illustré sur les figures 6 à 8, avec un circuit de fluide diélectrique réalisé distinctement et rapporté sur le condenseur,
[Fig.12] illustre une autre variante de réalisation du condenseur illustré sur les figures 6 à 8, avec un circuit de fluide diélectrique réalisé distinctement et rapporté sur le condenseur,
[Fig.13] illustre un autre exemple de réalisation d'un dispositif de stockage électrique comportant deux dispositifs de refroidissement conformes à la présente invention.

Les caractéristiques, les variantes et les différentes formes de réalisation de l'invention, telles que définies dans les revendications, peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits et selon dans les revendications, sont combinables entre eux si rien ne s'oppose à cette combinaison sur le plan technique. Sur les figures, les éléments communs à plusieurs figures conservent la même référence.

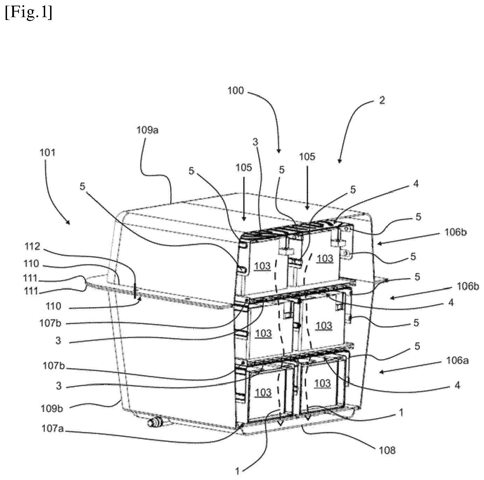

Sur la figure 1, un véhicule automobile à motorisation électrique ou hybride est pourvu d'un système de stockage électrique 100 destiné à fournir une énergie électrique à un moteur électrique équipant le véhicule automobile en vue de son déplacement. Le système de stockage électrique 100 comprend un premier boîtier 101 qui loge une pluralité d'éléments de batterie 103.

Le premier boîtier 101 comprend deux demi-coquilles 109a, 109b, dont une première coquille 109a et une deuxième coquille 109b, qui sont agencées en cuvette et qui sont jointes l'une à l'autre par l'intermédiaire de leur rebords 110. A cet effet, chaque rebord 110 est pourvu d'une lèvre 111, la lèvre 111 de la première coquille 109a étant fixée à la lèvre 111 de la deuxième coquille 109b par l'intermédiaire de moyens de jonction réversible 112, du type vissage ou analogue.

Les éléments de batterie 103 sont conformés en un parallélépipède et sont agencés les uns par rapport aux autres en étant disposés en une superposition étagée. Plus particulièrement, les éléments de batterie 103 sont empilés les uns sur les autres selon plusieurs colonnes 105 en étant répartis selon plusieurs étages 106a, 106b. En d'autres termes, chaque étage 106a, 106b d'éléments de batterie 103 comprend préférentiellement une pluralité d'éléments de batterie 103 en fonction du nombre de colonnes 105, étant entendu que le nombre d'étage et de colonnes d'éléments de batterie varie en fonction de l'encombrement autorisé du premier boîtier et en fonction de la quantité d'énergie électrique à stocker. Dans un même étage 106a, 106b d'éléments de batterie 103, ces derniers sont disposés côte-à-côte et chaque étage 106a, 106b d'éléments de batterie 103 est porté par un plateau 107a, 107b sur lesquels les éléments de batterie 103 reposent.

Selon l'exemple illustré, les éléments de batterie 103 sont au nombre de six et sont répartis sur deux colonnes 105 et trois étages 106a, 106b, chaque colonne 105 comprenant trois éléments de batterie 103 et chaque étage 106a, 106b comprenant deux éléments de batterie 103. Tel que cela a été précisé, le nombre de colonnes 105 et le nombre d'étages 106a, 106b sont susceptibles d'être différents de l'exemple illustré, en étant notamment supérieurs.

Au fur et à mesure de leur mise en fonctionnement, les éléments de batterie 103 tendent à s'échauffer. Aussi, le véhicule automobile est équipé d'un dispositif de refroidissement 2 des éléments de batterie 103. Avantageusement, le dispositif de refroidissement 2 de la présente invention est à même de refroidir simultanément chacun des étages 106a, 106b d'éléments de batterie 103. A cet effet, le dispositif de refroidissement 2 associe au moins un circuit de fluide diélectrique 5 qui est agencé pour pulvériser un fluide diélectrique 1 sur un étage 106a, 106b correspondant d'éléments de batterie 103 et au moins un condenseur 3 logeant un circuit de fluide de refroidissement 4 qui est prévu pour faire passer d'un état vapeur à un état liquide le fluide diélectrique 1 pulvérisé sur les éléments de batterie 103 et transformé sous forme de vapeur sous l'effet de la chaleur dégagée par les éléments de batterie.

Le fluide de refroidissement 4 peut notamment consister en un liquide de refroidissement ou un fluide réfrigérant, et par exemple consister en de l'eau glycolée, du R134a ou du 1234yf, ou bien encore du CO₂, sans que cette liste soit limitative.

En ce qui concerne le fluide diélectrique, celui-ci est choisi en fonction de son point de changement de phase. A titre d'exemple, le fluide choisi ici doit présenter une température d'évaporation à pression atmosphérique supérieure à 32, 33 ou 34 degrés Celsius et une température de condensation inférieure à 31, 30 ou 29 degrés Celsius.

En d'autres termes, le fluide diélectrique pulvérisé sous forme liquide sur les éléments de batterie d'un étage donné récupère des calories dégagées par ces éléments de batterie et est ainsi transformé en vapeur. La vapeur monte pour venir au contact du condenseur 3, à l'intérieur duquel peut circuler un fluide de refroidissement, et le condenseur récupère les calories emmagasinées précédemment par le fluide diélectrique jusqu'à le liquéfier. Sous forme liquide, et en gouttelettes, le fluide diélectrique chute par gravité dans le premier boîtier.

Plus particulièrement, le dispositif de refroidissement de la présente invention comprend autant de circuit de fluide diélectrique 5 que le premier boîtier 101 loge d'étages 106a, 106b d'éléments de batterie 103. Plus particulièrement encore, le dispositif de refroidissement 2 de la présente invention comprend avantageusement autant de condenseur 3 que le premier boîtier 101 loge d'étages 106a, 106b d'éléments de batterie 103. De plus, chaque circuit de fluide diélectrique 5 est avantageusement associé à un condenseur 3 correspondant pour optimiser une condensation du fluide diélectrique 1, et consécutivement un refroidissement des éléments de batterie 103, étage par étage, une telle association étant la plus compacte possible à l'intérieur du premier boîtier 101 qui délimite un espace confiné souhaité le plus petit possible.

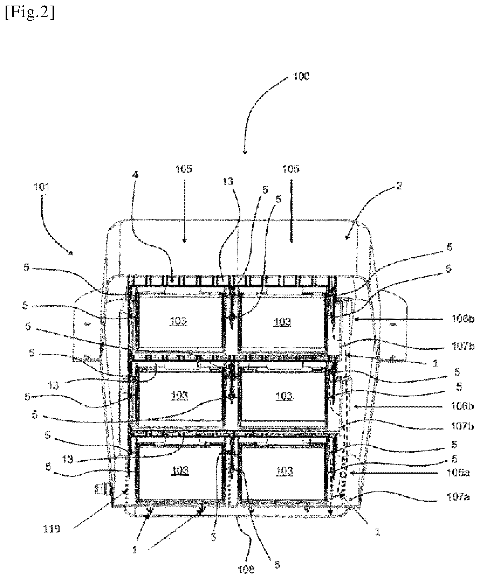

Tel que cela est plus particulièrement visible sur la figure 2, le dispositif de refroidissement 2 comprend le premier boîtier 101 dont un fond constitue un bac de récupération 108 du fluide diélectrique 1 qui s'écoule par gravité d'un étage 106a, 106b d'éléments de batterie 103 à un étage inférieur 106a, 106b d'éléments de batterie 103. Plus particulièrement, le bac de récupération est utilisé pour la récupération du fluide diélectrique ayant été vaporisé par chacun des condenseurs. A cet effet, chacun des plateaux supportant les étages d'éléments de batterie est configuré pour permettre le passage de fluide par gravité en direction du bac de récupération.

On distingue, parmi les plateaux 107a, 107b sur lesquels repose un étage 106a, 106b respectif d'éléments de batterie 103, un plateau inférieur 107a sur lequel repose un étage inférieur 106a d'éléments de batterie 103. On comprend que l'étage inférieur 106a est celui des étages 106a, 106b qui ne surplombe aucun autre étage et qui est donc le plus bas des étages 106a, 106b de la superposition étagée des éléments de batterie 103 décrites précédemment, en se référant à un agencement vertical et au sens d'écoulement par gravité du fluide diélectrique sous forme liquide. On comprend aussi que les étages supérieurs 106b d'éléments de batterie 103 porté par un plateau supérieur 107b correspondant surplombent au moins un autre étage 106a, 106b d'éléments de batterie 103.

Une fois cette distinction faite, il convient de noter que le plateau inférieur 107a est perforé d'une pluralité d'orifices 119 permettant l'écoulement du fluide diélectrique à son travers en direction du bac de récupération. Les orifices 119 sont dimensionnés pour permettre une opération de filtrage du fluide diélectrique avant que celui-ci ne pénètre dans le bac de récupération. Afin de permettre une opération de filtrage efficace, le plateau inférieur 107a est dimensionné pour être au contact sur son pourtour avec les parois délimitant le premier boîtier.

Il convient également de noter que les plateaux supérieurs 107b présentent une surface pleine, non perforée, et qu'ils sont dimensionnés pour former un passage en périphérie entre les pourtours du plateau correspondant et les parois délimitant le premier boîtier. On comprend que ces plateaux supérieurs 107b surplombent un étage inférieur et donc un condenseur et qu'il n'est pas souhaitable que du fluide diélectrique sous forme liquide viennent couler sur la face supérieure du condenseur, c'est-à-dire sur la face en regard du plateau supérieur. Dès lors, il est notable que selon l'invention, et tel que cela est illustré par des pointillés sur la figure 2, le fluide diélectrique sous forme liquide s'évacue par les côtés du plateau dans les étages supérieurs en tombant sur le plateau inférieur, le fluide diélectrique étant apte à passer dans le bac de récupération via les orifices 119 lorsque ce fluide stagne sur le plateau inférieur 107a.

Dans une variante non représentée, on pourra prévoir que chacun, ou au moins certains, des plateaux supérieurs soient également perforés, avantageusement les condenseurs que ces plateaux perforés surplombent sont agencés de manière à présenter un plan incliné par rapport au plan du plateau correspondant. Dès lors, l'eau s'écoulant à travers les plateaux supérieurs par les perforations n'est pas en mesure de stagner entre le condenseur et le plateau supérieur correspondant et peut s'écouler sur les côtés pour venir tomber par gravité dans le bac de récupération.

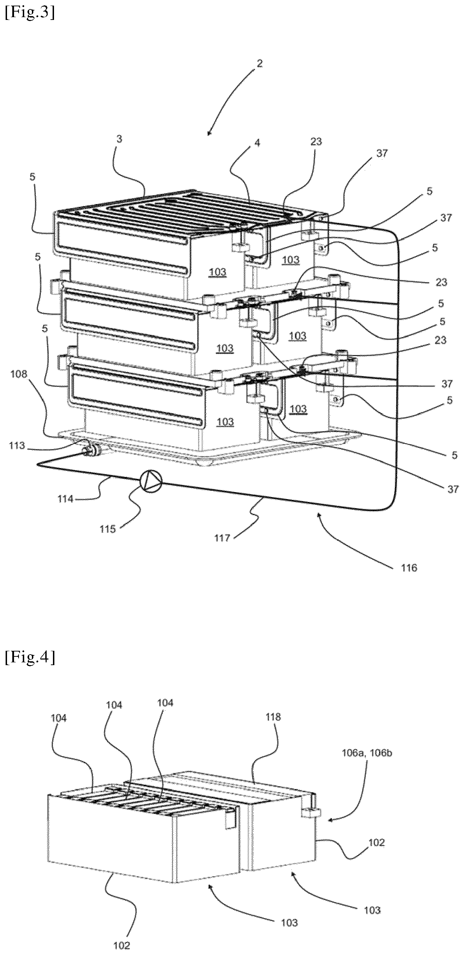

En se reportant sur la figure 3, le bac de récupération 108 est pourvu d'une durite d'évacuation 113 du fluide diélectrique 1 récupéré à l'intérieur du bac de récupération 108, la durite d'évacuation 113 étant en communication fluidique avec une conduite de recirculation 114 du fluide diélectrique 1. La conduite de recirculation 114 est équipée d'une pompe 115 pour ramener le fluide diélectrique 1 à chacune des arrivées de fluide diélectrique 23 équipant un condenseur. Ainsi, la pompe 115, qui est commune à chacun des étages d'éléments de batterie du dispositif de refroidissement 2, est à même d'alimenter en fluide diélectrique 1 l'ensemble des circuits de fluide diélectrique 5 que comprend le dispositif de refroidissement 2, ce qui est avantageux en termes de coût de réalisation. On comprend qu'un répartiteur, non représenté sur la figure, est apte à alimenter en fluide diélectrique 1 l'ensemble des circuits de fluide diélectrique 5 que comprend le dispositif de refroidissement 2 et qui équipent un étage 106a, 106b respectif d'éléments de batterie 103.

Tel qu'illustré, il est notable que les arrivés de fluide diélectrique 23 soient toutes agencées d'un même côté de chaque condenseur 3, pour faciliter la répartition du fluide diélectrique récupéré dans le bac de récupération commun dans chacune des arrivées de fluide diélectrique.

Chaque circuit de fluide diélectrique 5 est pourvu d'au moins une buse de projection 37 qui est à même de pulvériser le fluide diélectrique 1 à l'état liquide vers les éléments de batterie 103 afin de les refroidir. On comprend ainsi que le fluide diélectrique 1 parcourt une boucle de circulation 116 comprenant le bac de récupération 108 du fluide diélectrique 1 à l'état liquide, la conduite de recirculation 114 du fluide diélectrique 1 équipée de la pompe 115 qui alimente, par l'intermédiaire de moyens de recirculation 117, conjointement chaque circuit de fluide diélectrique 5 équipant un étage 106a, 106b d'éléments de batterie 103, les buses de projection 37 des circuits de fluide diélectrique 5 aspergeant les éléments de batterie 103 de fluide diélectrique 1 qui se vaporise à leur contact, puis qui se liquéfie au contact des condenseurs 3 pour s'égoutter par gravité à l'intérieur d'un bac de récupération 108 commun. On comprend le caractère avantageux de la présente invention qui réside notamment en une mutualisation des moyens de refroidissement énoncés pour chacun des étages 106a, 106b de l'agencement en superposition étagée des éléments de batterie 103.

Sur la figure 4, est représenté un étage 106a, 106b d'éléments de batterie 103 selon une première variante de réalisation. Chaque élément de batterie 103 comprend un deuxième boîtier 102 qui loge une pluralité de cellules de stockage électrique 104. Le deuxième boîtier 102 comprend un couvercle 118, ôté de l'un des deuxièmes boîtiers 102 pour rendre apparentes les cellules de stockage électrique 104. Dans cette première variante de réalisation, le fluide diélectrique pulvérisé via les buses équipant le circuit de fluide diélectrique entre en contact avec le deuxième boîtier et se vaporise sous l'effet de la chaleur dégagée par ce deuxième boîtier. Le refroidissement de ce deuxième boîtier génère une baisse de température de l'enceinte dans laquelle sont logées les cellules de stockage électrique et donc une baisse de température des cellules ellesmêmes.

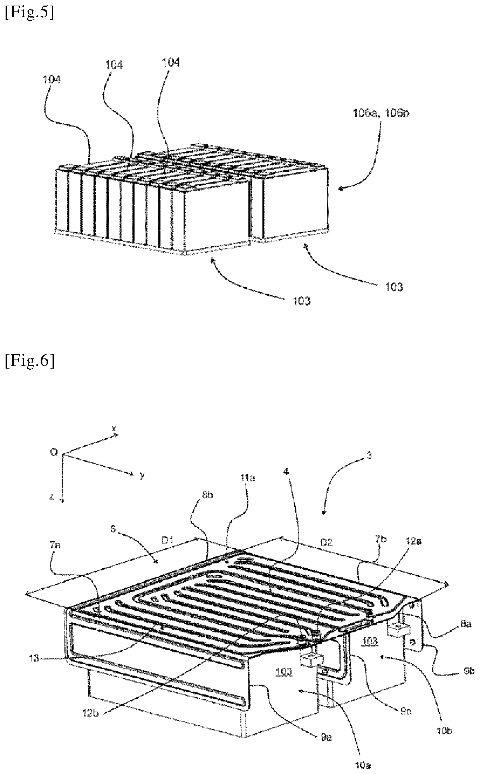

Sur la figure 5, est représenté un étage 106a, 106b d'éléments de batterie 103 selon une deuxième variante de réalisation. Chaque élément de batterie 103 comprend uniquement une pluralité de cellules de stockage électrique 104. Dans cette deuxième variante de réalisation, dans laquelle les cellules de stockage électrique sont directement en regard du condenseur, le fluide diélectrique pulvérisé via les buses équipant le circuit de fluide diélectrique entre en contact directement avec les cellules de stockage électrique et se vaporise sous l'effet de la chaleur dégagée par chacune de ces cellules.

On comprend que chaque cellule de stockage électrique 104 est l'unité fonctionnelle de l'élément de batterie 103 qui fournit au moins partiellement au moteur électrique l'énergie électrique qui lui est nécessaire. La cellule de stockage électrique 104 est par exemple une cellule Ion-Lithium ou analogue.

Sur la figure 6, le condenseur 3 est représenté dans un repère orthonormé Oxyz qui comprend un axe longitudinal Ox, un axe latéral Oy et un axe transversal Oz. Le condenseur 3 comprend une paroi principale 6 qui s'étend à l'intérieur d'un plan parallèle au plan Oxy. La paroi principale 6 est agencée sensiblement en un quadrilatère qui comporte deux extrémités longitudinales de la paroi principale 7a, 7b, opposées l'une à l'autre et ménagées à une première distance D1 l'une de l'autre, et deux extrémités latérales de la paroi principale 8a, 8b, opposées l'une à l'autre et ménagées à une deuxième distance D2 l'une de l'autre.

Selon la variante de réalisation illustrée, le condenseur 3 comprend aussi trois parois secondaires 9a, 9b, 9c qui s'étendent respectivement dans un plan parallèle au plan Oyz. Parmi les trois parois secondaires 9a, 9b, 9c, on distingue une première paroi secondaire latérale ga qui équipe une première extrémité longitudinale de la paroi principale 7a, une deuxième paroi secondaire latérale 9b qui équipe une deuxième extrémité longitudinale de la paroi principale 7b et une paroi secondaire intermédiaire 9c qui est interposée entre les parois secondaires latérales 9a, 9b en étant disposée ici à une égale distance de la première paroi secondaire latérale 9a et de la deuxième paroi secondaire latérale 9b.

La première paroi secondaire latérale 9a et la paroi secondaire intermédiaire 9c délimite avec une portion de la paroi principale 6 une première chambre 10a qui est destinée à recevoir un premier élément de batterie 103. La deuxième paroi secondaire latérale 9b et la paroi secondaire intermédiaire 9c délimite avec une autre portion de la paroi principale 6 une deuxième chambre 10b qui est destinée à recevoir un deuxième élément de batterie 103.

La paroi principale 6 loge le circuit de fluide de refroidissement 4 qui serpente à l'intérieur de la paroi principale 6, au-dessus de la première chambre 10a et au-dessus de la deuxième chambre 10b. Selon un mode de réalisation, le circuit de fluide de refroidissement 4 est ménagé dans une épaisseur de la paroi principale 6. Selon un autre mode de réalisation, la paroi principale 6 est formée de deux coques apposées l'une contre l'autre, au moins une coque comportant un bossage qui délimite une cavité formant le circuit de fluide de refroidissement 4. Dans ce cas-là, le circuit de fluide de refroidissement 4 est ménagé en relief de l'une des coques au moins.

La paroi principale 6 comporte une première face 11a, supérieure sur la figure 6, qui est pourvue d'une arrivée de fluide de refroidissement 12a et d'une sortie de fluide de refroidissement 12b. L'arrivée de fluide de refroidissement 12a est prévu pour permettre une admission d'un fluide de refroidissement 13 à l'intérieur du circuit de fluide de refroidissement 4 tandis que la sortie de fluide de refroidissement 12b est prévu pour permettre une évacuation du fluide de refroidissement 13 hors du circuit de fluide de refroidissement 4. Le fluide de refroidissement 13 est par exemple du dioxyde de carbone ou analogue. On comprend qu'à partir d'une circulation du fluide de refroidissement 13 à l'intérieur du circuit de fluide de refroidissement 4, le fluide de refroidissement 13 refroidit la paroi principale 6 pour la maintenir à une température inférieure à une température de condensation du fluide diélectrique 1, ce qui garantit qu'à son contact, le fluide diélectrique 1 passe à l'état liquide.

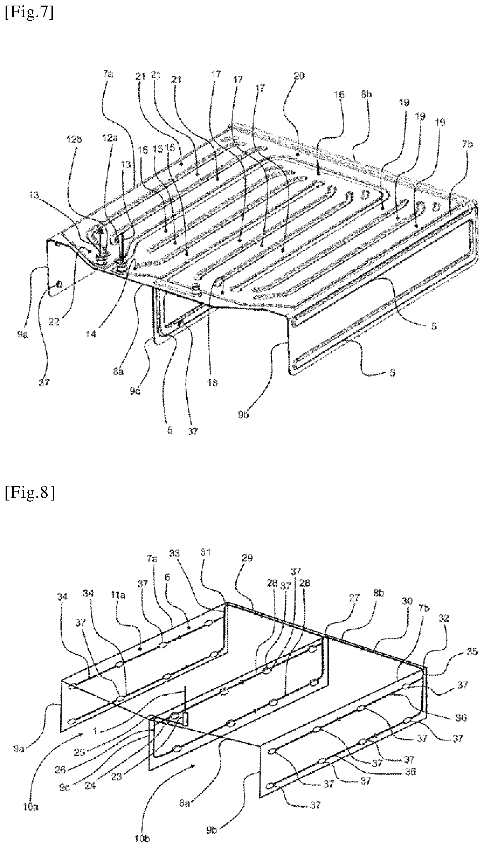

Tel que cela est plus visible sur la figure 7, l'arrivée de fluide de refroidissement 12a et la sortie de fluide de refroidissement 12b sont ménagées à proximité d'une première extrémité latérale de la paroi principale 8a et le circuit de fluide de refroidissement 4 s'étend depuis l'arrivée de fluide de refroidissement 12a jusqu'à la sortie du fluide de refroidissement 12b. Le circuit de fluide de refroidissement 4 comporte par exemple plusieurs branches de circulation du fluide de refroidissement 15, 17, 19, 21 qui sont ménagées en parallèle les unes des autres. Ainsi selon l'exemple illustré, l'arrivée de fluide de refroidissement 12a est en communication fluidique avec un répartiteur 14 qui alimente trois premières branches de circulation de fluide de refroidissement 15 parallèles les unes aux autres. Ces trois premières branches de circulation de fluide de refroidissement 15 débouchent à l'intérieur d'un premier collecteur 16 qui est ménagé à proximité d'une deuxième extrémité latérale de la paroi principale 8b. Aussi, à l'intérieur des premières branches de circulation de fluide de refroidissement 15, le fluide de refroidissement 13 parcourt sensiblement la deuxième distance D2. Le premier collecteur 16 est en communication fluidique avec trois deuxièmes branches de circulation de fluide de refroidissement 17 qui sont ménagées en parallèle les unes des autres. Les trois deuxièmes branches de circulation de fluide de refroidissement 17 s'étendent depuis le premier collecteur 16 jusqu'à un deuxième collecteur 18 qui est ménagée à proximité de la première extrémité latérale de la paroi principale 8a. Aussi, à l'intérieur des deuxièmes branches de circulation de fluide de refroidissement 17, le fluide de refroidissement 13 parcourt à nouveau sensiblement la deuxième distance D2. Le deuxième collecteur 18 est en communication fluidique avec trois troisièmes branches de circulation de fluide de refroidissement 19 qui sont ménagées en parallèle les unes des autres, l'une des troisièmes branches de circulation du fluide de refroidissement 19 bordant la deuxième extrémité longitudinale de la paroi principale 7b. Les trois troisièmes branches de circulation de fluide de refroidissement 19 s'étendent depuis le deuxième collecteur 18 jusqu'à un troisième collecteur 20 qui est ménagée à proximité de la deuxième extrémité latérale de la paroi principale 8b et qui s'étend le long de la deuxième extrémité latérale de la paroi principale 8b jusqu'à la première extrémité longitudinale de la paroi principale 7a. Aussi, à l'intérieur des troisièmes branches de circulation de fluide de refroidissement 19, le fluide de refroidissement 13 parcourt à nouveau sensiblement la deuxième distance D2. Aussi, à l'intérieur du troisième collecteur 20, le fluide de refroidissement 13 parcourt sensiblement la première distance D1. Le troisième collecteur 20 est en communication fluidique avec trois quatrièmes branches de circulation de fluide de refroidissement 21 qui sont ménagées en parallèle les unes des autres, l'une des quatrièmes branches de circulation du fluide de refroidissement 21 bordant la première extrémité longitudinale de la paroi principale 7a. Les trois quatrièmes branches de circulation de fluide de refroidissement 21 s'étendent depuis le troisième collecteur 20 jusqu'à un quatrième collecteur 22 qui est pourvu de la sortie du fluide de refroidissement 12b. On comprend que le nombre de branches de circulation de fluide de refroidissement 15, 17, 19, 21 disposées entre deux collecteurs 16, 18, 20 ou entre un collecteur 16, 18, 20 et le répartiteur 14 ainsi que le nombre de collecteurs 16, 18, 20 sont susceptibles d'être distincts de ceux précédemment énoncés.

Le fait que le fluide de refroidissement 13 parcourt à plusieurs reprises la deuxième distance D2 et la première distance D1 permet un refroidissement de l'ensemble de la surface de la paroi principale 6, et consécutivement un refroidissement du fluide diélectrique 1 qui vient au contact de la paroi principale 6 après sa vaporisation au contact des éléments de batterie 103.

Il est notable que la paroi principale et les différentes branches de circulation du fluide de refroidissement qui y sont formées sont configurées de sorte à ce que le circuit de fluide de refroidissement 4 est agencé dans une zone centrale 61 de la paroi principale 6.

Il va maintenant s'agir de décrire, à la suite de la description du circuit de fluide de refroidissement 4, le circuit de fluide diélectrique 5, ici illustré selon différentes variantes de réalisation.

Tel que cela sera décrit ci-après, et pour faire suite à ce qui précède sur la position dans une zone centrale 61 du circuit de fluide de refroidissement, le circuit de fluide diélectrique 5 est agencé dans le condenseur de sorte à laisser dégager cette zone centrale formée dans la paroi principale, soit en s'étendant sur d'autres parois du condenseur que la paroi principale, et/ou en s'étendant sur une zone périphérique 60 de la paroi principale.

Dans une première variante de réalisation, notamment illustré sur les figures 6 à 9, le circuit de fluide diélectrique 5 est réalisé dans l'épaisseur du condenseur, c'est-à-dire en étant intégré dans les parois 6, 9a, 9b, 9c formant le condenseur 3.

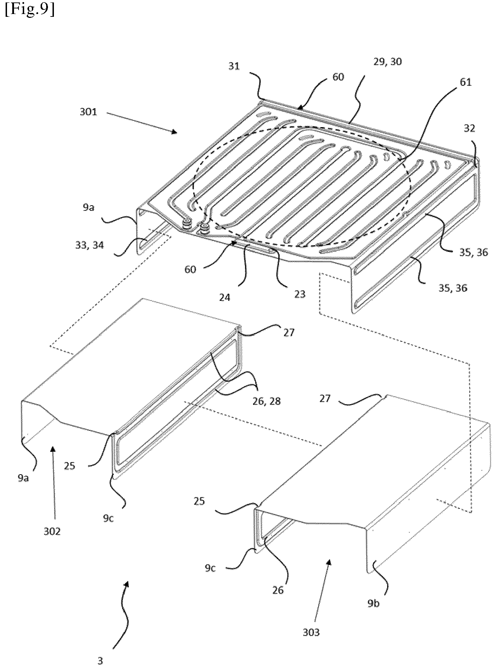

Notamment, le circuit peut être réalisé par des emboutis formés respectivement dans l'une et ou l'autre de deux coques qui forment chacune des parois une fois assemblées l'une contre l'autre. Dans ce contexte, et selon une forme de réalisation rendue plus visible sur la figure vue éclatée de la figure 9, les parois 6, 9a, 9b, 9c peuvent être formées à partir de trois coques 301, 302, 303, notamment métalliques, conformées en U dont une première coque 301 logeant une deuxième coque 302 et une troisième coque 303, le circuit de fluide de refroidissement 4 et le circuit de fluide diélectrique 5 étant ménagés entre les coques 301, 302, 303, notamment à partir d'un emboutissage de ces dernières. Les coques 301, 302, 303 sont par exemple brasées ou soudées entre elles. On comprend que dans cette variante de réalisation, la deuxième coque et troisième coque sont dimensionnées pour délimiter chacune une chambre de réception d'un élément de stockage électrique.

Le circuit de fluide diélectrique peut notamment être décrit en référence aux figures 8 et 9, illustrant schématiquement et dans une représentation éclatée ce circuit.

La première face 11a de la paroi principale 6 est pourvue d'une arrivée de fluide diélectrique 23 qui est ménagée à proximité de la première extrémité latérale de la paroi principale 8a. L'arrivée de fluide diélectrique 23 permet une admission du fluide diélectrique 1 à l'intérieur du circuit de fluide diélectrique 5. L'arrivée de fluide diélectrique 23 est en communication fluidique avec un premier canal de fluide diélectrique 24 qui longe la première extrémité latérale de la paroi principale 8a entre l'arrivée de fluide diélectrique 23 et un premier point de circulation du fluide diélectrique 25 qui est situé à l'aplomb de la paroi secondaire intermédiaire 9c.

Plus particulièrement, le premier canal de fluide diélectrique 24 peut être formé par un embouti formé dans la première coque 301 porteur de l'arrivé de fluide diélectrique et par une surface plane de la deuxième ou troisième coque. Et le premier point de circulation peut être formé par deux emboutis en regard respectivement formés dans les parois des deuxième et troisième coques participant à former la paroi secondaire intermédiaire.

Le premier point de circulation du fluide diélectrique 25 est en communication fluidique avec un deuxième canal de fluide diélectrique 26 qui s'étend à l'intérieur de la paroi secondaire intermédiaire 9c jusqu'à un deuxième point de circulation du fluide diélectrique 27 situé à proximité de la deuxième extrémité latérale de la paroi principale 8b. Le deuxième canal de fluide diélectrique 26 comporte deux premières branches de circulation du fluide diélectrique 28 parallèles l'une à l'autre.

Le deuxième point de circulation du fluide diélectrique 27 est en communication fluidique avec un troisième canal de fluide diélectrique 29 et un quatrième canal de fluide diélectrique 30 qui s'étendent l'un et l'autre le long de la deuxième extrémité latérale de la paroi principale 8b.

Le troisième canal de fluide diélectrique 29 s'étend entre le deuxième point de circulation du fluide diélectrique 27 et un quatrième point de circulation du fluide diélectrique 31 qui est situé à l'aplomb de la première paroi secondaire latérale 9a.

Le quatrième point de circulation du fluide diélectrique 31 est en communication fluidique avec un cinquième canal de fluide diélectrique 33 qui s'étend à l'intérieur de la première paroi secondaire latérale ga et qui comporte deux deuxièmes branches de circulation du fluide diélectrique 34 parallèles l'une à l'autre. Les deuxièmes branches de circulation du fluide diélectrique 34 s'étendent depuis la deuxième extrémité latérale de la paroi principale 8b jusqu'à la première extrémité latérale de la paroi principale 8b.

Le quatrième canal de fluide diélectrique 30 s'étend entre le deuxième point de circulation du fluide diélectrique 27 et un cinquième point de circulation du fluide diélectrique 32 qui est situé à l'aplomb de la deuxième paroi secondaire latérale 9b.

A l'intérieur des canaux de circulation du fluide diélectrique, le fluide diélectrique 1 parcourt sensiblement la deuxième distance D2, ce qui permet une projection du fluide diélectrique sur l'ensemble d'une première dimension, ici la longueur, des éléments de batterie 103. De plus, le fait que les canaux de circulation comprennent plusieurs branches de circulation du fluide diélectrique permet une pulvérisation du fluide diélectrique sur des hauteurs différentes des éléments de batterie, respectivement à une seconde dimension des éléments de batterie parallèle à la direction d'empilement des étages, et donc une homogénéisation de l'opération de refroidissement de l'élément de batterie considéré.

Le cinquième point de circulation du fluide diélectrique 32 est en communication fluidique avec un sixième canal de fluide diélectrique 35 qui s'étend à l'intérieur de la deuxième paroi secondaire latérale 9b et qui comporte deux troisièmes branches de circulation du fluide diélectrique 36 parallèles l'une à l'autre. Les troisièmes branches de circulation du fluide diélectrique 36 s'étendent depuis la deuxième extrémité latérale de la paroi principale 8b jusqu'à la première extrémité latérale de la paroi principale 8b. Ainsi, à l'intérieur du sixième canal de fluide diélectrique 35, le fluide diélectrique 1 parcourt sensiblement la deuxième distance D2.

Chaque branche de circulation du fluide diélectrique 28, 34, 36 est équipé d'une pluralité de buses de projection 37 du fluide diélectrique 1 vers la chambre 10a, 10b que participent à border les parois secondaires 9a, 9b, 9c. Selon l'exemple illustré chaque branche de circulation du fluide diélectrique 28, 34, 36 est équipée de quatre buses de projection 37. Le nombre de buses de projection 37 équipant une branche de circulation du fluide diélectrique 28, 34, 36 est susceptible d'être différent.

On note que les premières branches de circulation du fluide diélectrique 28 sont pourvues d'un nombre de buses de projection 37 qui est équivalent au double du nombre de buses de projection 37 qu'équipent respectivement les deuxièmes branches de circulation du fluide diélectrique 34 et les troisièmes branches de circulation du fluide diélectrique 36, pour pulvériser du fluide diélectrique 1 vers la première chambre 10a et vers la deuxième chambre 10b, en raison du fait que la paroi secondaire intermédiaire 9c, qui est équipée des premières branches de circulation du fluide diélectrique 28, borde les deux chambres 10a, 10b. On comprend que les buses de projection 37 équipant les deuxièmes branches de circulation du fluide diélectrique 34 sont destinées à pulvériser le fluide diélectrique 1 vers la première chambre 10a et que les buses de projection 37 équipant les troisièmes branches de circulation du fluide diélectrique 36 sont destinées à pulvériser le fluide diélectrique 1 vers la deuxième chambre 10b.

Selon la variante de réalisation décrite précédemment, le circuit de fluide diélectrique 5 est réalisé dans l'épaisseur de la paroi principale 6 du condenseur 3 et dans l'épaisseur des parois secondaires 9a, 9b, 9c du condenseur 3.

La description et les figures correspondantes, notamment la figure 9, illustrent bien la caractéristique selon laquelle le circuit de fluide de refroidissement 4 est ménagé uniquement dans l'épaisseur de la paroi principale 6, et dans une zone centrale 61, tandis que le circuit de fluide diélectrique 5 est configuré pour dégager cette zone centrale et ne pas pénaliser l'action du condenseur sur le fluide diélectrique vaporisé s'étend. Notamment, le circuit de fluide diélectrique peut s'étendre dans l'épaisseur de l'une et/ou l'autre des parois secondaires 9a, 9, 9c, et il peut s'étendre en bordure de la paroi principale, dans une zone périphérique 60.

Selon les variantes de réalisation décrites ci-après, le condenseur 3 est exempt de parois secondaires, de telle sorte que le condenseur 3 est principalement constitué d'une paroi principale 6.

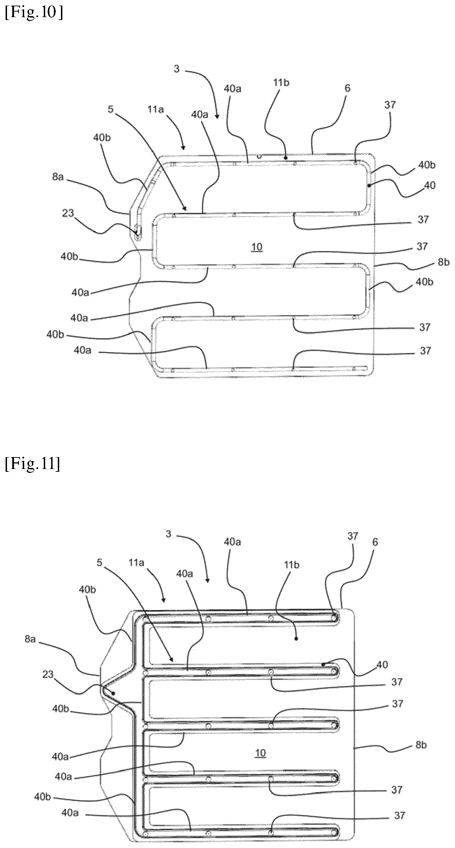

Selon les variantes de réalisation illustrées sur les figures 10 et 11, le circuit de fluide diélectrique 5 est réalisé par un conduit distinct du condenseur et rapporté notamment sur une deuxième face 11b de la paroi principale 6, cette deuxième face 11b étant opposée à la première face 11a et bordant une chambre unique 10 de réception d'une pluralité d'éléments de batterie 103. Dans ce cas-là, le circuit de fluide diélectrique 5 est par exemple réalisé à partir d'un tube 40 en aluminium qui est brasé et/ou soudé sur la deuxième face 11b de la paroi principale 6 du condenseur 3. Le tube 40 est pourvu d'une pluralité de buses de projection 37 orientées vers la chambre unique 10. Le tube 40 est par exemple agencé en un serpentin plan qui comporte des premières portions de tube 40a parallèles aux extrémités longitudinales de la paroi principale 7a, 7b et des deuxièmes portions de tube 40b longeant les extrémités latérales de la paroi principale 8a, 8b, au moins une première portion de tube 40a étant interposée entre deux deuxièmes portions de tube 40b et au moins une deuxième portion de tube 40b étant interposée entre deux premières portions de tube 40a.

Sur la figure 10, les deuxièmes portions de tube 40b sont alternativement ménagées à proximité de la première extrémité latérale de la paroi principale 8a et de la deuxième extrémité latérale de la paroi principale 8b.

Sur la figure 11, les deuxièmes portions de tube 40b sont ménagées à proximité de la première extrémité latérale de la paroi principale 8a.

Selon ces deux dernières formes de réalisation, le fluide diélectrique 1 est principalement projetée sur des surfaces supérieures des éléments de batterie 103 disposées en regard de la deuxième face 11b de la paroi principale 6. Néanmoins, certaines buses de projection 37 sont par exemple orientées pour projeter le fluide diélectrique sur des parois latérales des éléments de batterie qui sont sensiblement orthogonales à la paroi principale 6.

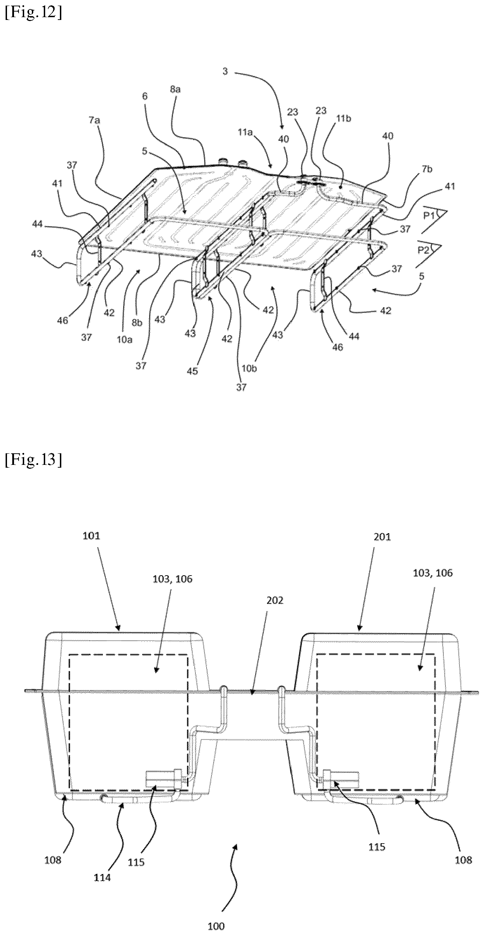

Selon une autre variante de réalisation illustrée sur la figure 12, le condenseur 3 est équipé de deux circuits de fluide diélectrique 5 qui s'étendent à distance de la deuxième face 11b de la paroi principale 6, opposée à la première face 11a. Chaque circuit de fluide diélectrique 5 est par exemple réalisé à partir d'un tube 40 qui s'étend partiellement à l'intérieur de deux plans de tubes P1, P2. Ainsi, chaque circuit de fluide diélectrique 5 comprend au moins une première portion de circuit 41 qui s'étend à l'intérieur d'un premier plan P1 et une deuxième portion de circuit 42 s'étend à l'intérieur d'un deuxième plan P2, le premier plan P1 étant interposé entre la plaque principale 6 et le deuxième plan P2, les distances ménagées entre la plaque principale 6 et le premier plan P1 d'une part et entre le premier plan P1 et le deuxième plan P2 d'autre part étant non-nulles. La première portion de circuit 41 et la deuxième portion de circuit 42 d'un même circuit de fluide diélectrique 5 sont reliées l'une à l'autre par l'intermédiaire d'au moins une troisième portion de circuit 43 qui s'étend selon un axe orthogonal au premier plan P1 et au deuxième plan P2. Des renforts mécaniques 44 s'étendent entre la première portion de circuit 41 et la deuxième portion de circuit 42 d'un même circuit de fluide diélectrique 5 pour conforter une robustesse de chaque circuit de fluide diélectrique 5. Ces dispositions sont telles que chaque tube 40 est agencé en un serpentin qui s'étend dans un volume bordé au moins par la plaque principale 6 et le deuxième plan P2. Le tube 40 est pourvu d'une pluralité de buses de projection 37 orientées vers la première chambre 10a ou la deuxième chambre 10b qui sont au moins partiellement délimitées par un agencement intermédiaire 45 d'un élément d'une première portion de circuit 41 et d'un élément d'une deuxième portion de circuit 42 superposés l'une à l'autre, l'agencement intermédiaire 45 étant interposé entre deux agencements latéraux 46 respectifs d'un élément d'une première portion de circuit 41 et d'un élément d'une deuxième portion de circuit 42 superposés l'une à l'autre.

Ces dispositions sont telles que les circuits de fluide diélectrique ainsi agencés sont aptes à pulvériser le fluide diélectrique sur les parois latérales des éléments de batterie 103.

La figure 13 illustre un exemple de réalisation d'un dispositif de stockage électrique dans lequel deux dispositifs de refroidissement sont prévus. Conformément à ce qui a été décrit précédemment, chaque dispositif de refroidissement est associé à une portion du système de stockage électrique 100 comprenant un boîtier 101, 201 qui loge une pluralité d'éléments de batterie 103 agencés en étages 106, et chaque dispositif de refroidissement comporte un bac de récupération agencé en fond du boîtier correspondant pour récupérer le fluide diélectrique pulvérisé à l'origine sur une pluralité d'étages d'éléments de batterie.

Dans l'exemple illustré, un premier boîtier 101 et un deuxième boîtier 201 sont agencés côte à côte avec une portion 202 de raccordement qui présente une zone de dégagement pour se conformer à un agencement particulier d'un véhicule automobile, sans que cela soit limitatif. L'exemple de la figure 13 est notamment intéressant en ce qu'il permet de comprendre qu'un dispositif de stockage électrique peut comprendre plusieurs bacs de récupération et plusieurs pompes sans sortir du contexte de l'invention, dès lors que chaque bac de récupération et chaque pompe associée sont agencés pour récupérer le fluide électrique pulvérisés sur plusieurs éléments de batterie empilés les uns au-dessus des autres et au-dessus du bac de récupération considéré.

## Revendications

1. Dispositif de refroidissement (2) d'une pluralité d'éléments de batterie (103) d'un véhicule automobile, le dispositif de refroidissement (2) comprenant un premier boîtier (101) et une pluralité d'étages (106a, 106b) d'éléments de batterie (103) disposés dans le premier boîtier, chaque étage (106a, 106b) d'éléments de batterie (103) étant équipé d'un condenseur (3) pourvu d'un circuit de fluide de refroidissement (4), le condenseur (3) étant associé à au moins un circuit de fluide diélectrique (5) qui est configuré pour projeter un fluide diélectrique (1) sur les éléments de batterie (103) d'un même étage (106a, 106b) et un bac de récupération (108) du fluide diélectrique (1) qui est commun à la pluralité d'étages (106a, 106b) d'éléments de batterie (103), le dispositif de refroidissement (2) comprenant des moyens de recirculation (117) du fluide diélectrique (1) qui sont pourvus d'une pompe (115) et qui relient le bac de récupération (108) à au moins une arrivée de fluide diélectrique (23) que comprend chacun des circuits de fluide diélectrique (5).

2. Dispositif de refroidissement (2) selon la revendication 1, dans lequel un plateau est disposé dans le premier boîtier pour supporter chacun des étages d'éléments de batterie, chaque plateau étant configuré pour permettre un écoulement par gravité du fluide diélectrique vers le bac de récupération

3. Dispositif de refroidissement (2) selon la revendication 1 ou 2, dans lequel au moins un plateau (107a) sur lequel repose un étage (106a) d'éléments de batterie (103) est perforé d'une pluralité d'orifices pour permettre le filtrage du fluide diélectrique (1) vers le bac de récupération (108).

4. Dispositif de refroidissement (2) selon l'une quelconque des revendications précédentes, dans lequel le circuit de fluide diélectrique (5) est formé dans l'épaisseur du condenseur (3).

5. Dispositif de refroidissement (2) selon l'une quelconque des revendications 1 à 3, dans lequel le circuit de fluide diélectrique (5) est formé par un conduit réalisé distinctement du condenseur et rapporté sur une face (11b) du condenseur, qui est tournée vers une chambre de réception d'au moins un élément de batterie.

6. Dispositif de refroidissement (2) selon l'une quelconque des revendications précédentes, dans lequel le condenseur (3) comprend au moins une paroi principale (6) pourvue de l'arrivée de fluide diélectrique (23) ainsi que d'une arrivée de fluide de refroidissement (12a) et d'une sortie de fluide de refroidissement (12b) entre lesquelles s'étend le circuit de fluide de refroidissement (4), le condenseur comprenant en outre une pluralité de parois secondaires (9a, 9b, 9c) formant saillie de la paroi principale, dont une première paroi secondaire latérale (9a) qui équipe une première extrémité longitudinale de la paroi principale (7a), une deuxième paroi secondaire latérale (9b) qui équipe une deuxième extrémité longitudinale de la paroi principale (7b) et une paroi secondaire intermédiaire (9c) qui est interposée entre les parois secondaires latérales (9a, 9b), la paroi secondaire intermédiaire participant à délimiter avec une partie de la paroi principale et l'une des parois secondaires latérales une chambre de réception d'un élément de batterie d'un des étages (106a, 106b) d'éléments de batterie (103).

7. Dispositif de refroidissement (2) selon l'une quelconque des revendications précédentes, dans lequel le circuit de fluide diélectrique (5) est équipé d'une pluralité de buses de projection (37), chaque buse de projection étant orientée vers l'un des éléments de batterie (103).

8. Dispositif de refroidissement (2) selon l'une quelconque des revendications précédentes, dans lequel chaque élément de batterie (103) comprend au moins une cellule de stockage électrique (104), la ou les cellules de stockage électrique (104) étant directement en regard des parois du condenseur.

9. Dispositif de refroidissement (2) selon l'une quelconque des revendications 1 à 7, dans lequel chaque élément de batterie (103) comprend un deuxième boîtier (102) logeant au moins une cellule de stockage électrique (104), le deuxième boîtier s'étendant entre la ou les cellules de stockage et les parois du condenseur.

10. Procédé de mise en oeuvre d'un dispositif de refroidissement (2) selon l'une quelconque des revendications précédentes, ledit procédé comprenant une étape de pulvérisation du fluide diélectrique (1) vers des étages (106a, 106b) d'éléments de batterie (103), une étape d'évaporation du fluide diélectrique au contact des éléments de batterie (103), une étape de condensation du fluide diélectrique (1) au contact du condenseur (3), une étape de récupération du fluide diélectrique (1) condensé au niveau de chaque étage (106a, 106b) à l'intérieur du bac de récupération (108) commun à la pluralité d'étages (106a, 106b) et une étape de recirculation du fluide diélectrique vers chaque circuit de fluide diélectrique (5) équipant un étage (106a, 106b) correspondant d'éléments de batterie (103).

## Patentansprüche

1. Vorrichtung zur Kühlung (2) einer Mehrzahl von Batterieelementen (103) eines Kraftfahrzeugs, wobei die Kühlvorrichtung (2) ein erstes Gehäuse (101) und eine Mehrzahl von Etagen (106a, 106b) von Batterieelementen (103), die im ersten Gehäuse angeordnet sind, umfasst, wobei jede Etage (106a, 106b) von Batterieelementen (103) mit einem Kondensator (3) ausgerüstet ist, der mit einem Kühlfluidkreis (4) versehen ist, wobei der Kondensator (3) wenigstens einem Kreis für dielektrisches Fluid (5), der dazu ausgebildet ist, ein dielektrisches Fluid (1) auf die Batterieelemente (103) ein und derselben Etage (106a, 106b) zu spritzen, und einem Behälter zum Sammeln (108) des dielektrischen Fluids (1), der für die Mehrzahl von Etagen (106a, 106b) von Batterieelementen (103) gemeinsam ist, zugeordnet ist, wobei die Kühlvorrichtung (2) Mittel zur Rückführung (117) des dielektrischen Fluids (1) umfasst, die mit einem Pumpe (115) versehen sind und die den Sammelbehälter (108) mit wenigstens einer Zuleitung für dielektrisches Fluid (23) verbinden, die jeder der Kreise für dielektrisches Fluid (5) umfasst.

2. Kühlvorrichtung (2) nach Anspruch 1, wobei eine Platte im ersten Gehäuse angeordnet ist, um jede der Etagen von Batterieelementen zu tragen, wobei jede Platte dazu ausgebildet ist, ein Ablaufen des dielektrischen Fluids durch die Schwerkraft hin zum Sammelbehälter zu ermöglichen.

3. Kühlvorrichtung (2) nach Anspruch 1 oder 2, wobei wenigstens eine Platte (107a), auf der eine Etage (106a) aus Batterieelementen (103) aufliegt, von einer Mehrzahl von Öffnungen perforiert ist, um die Filterung des dielektrischen Fluids (1) hin zum Sammelbehälter (108) zu ermöglichen.

4. Kühlvorrichtung (2) nach einem der vorhergehenden Ansprüche, wobei der Kreis für dielektrisches Fluid (5) in der Dicke des Kondensators (3) gebildet ist.

5. Kühlvorrichtung (2) nach einem der Ansprüche 1 bis 3, wobei der Kreis für dielektrisches Fluid (5) von einer Leitung gebildet ist, die vom Kondensator gesondert ausgebildet ist und auf eine Seite (11b) des Kondensators aufgesetzt ist, die einer Kammer zur Aufnahme wenigstens eines Batterieelements zugewandt ist.

6. Kühlvorrichtung (2) nach einem der vorhergehenden Ansprüche, wobei der Kondensator (3) wenigstens eine Hauptwand (6) umfasst, die mit der Zuleitung für dielektrisches Fluid (23) sowie einer Zuleitung für Kühlfluid (12a) und einem Kühlfluidauslass (12b) versehen ist, zwischen denen sich der Kreis für Kühlfluid (4) erstreckt, wobei der Kondensator ferner eine Mehrzahl von Nebenwänden (9a, 9b, 9c) umfasst, die von der Hauptwand abstehen, davon eine erste seitliche Nebenwand (9a), die an einem ersten Längsende der Hauptwand (7a) angesetzt ist, eine zweite seitliche Nebenwand (9b), die an einem zweiten Längsende der Hauptwand (7b) angesetzt ist, und eine zwischenliegende Nebenwand (9c), die zwischen die seitlichen Nebenwände (9a, 9b) eingefügt ist, wobei die zwischenliegende Nebenwand dazu beiträgt, mit einem Abschnitt der Hauptwand und einer ihrer seitlichen Nebenwände eine Kammer zur Aufnahme eines Batterieelements einer der Etagen (106a, 106b) von Batterieelementen (103) zu begrenzen.

7. Kühlvorrichtung (2) nach einem der vorhergehenden Ansprüche, wobei der Kreis für dielektrisches Fluid (5) mit einer Mehrzahl von Spritzdüsen (37) ausgerüstet ist, wobei jede Spritzdüse einem der Batterieelemente (103) zugewandt ist.

8. Kühlvorrichtung (2) nach einem der vorhergehenden Ansprüche, wobei jedes Batterieelement (103) wenigstens eine elektrische Speicherzelle (104) umfasst, wobei die elektrische(n) Speicherzelle(n) (104) den Wänden des Kondensators direkt gegenüberliegen.

9. Kühlvorrichtung (2) nach einem der Ansprüche 1 bis 7, wobei jedes Batterieelement (103) ein zweites Gehäuse (102) umfasst, das wenigstens eine elektrische Speicherzelle (104) aufnimmt, wobei sich das zweite Gehäuse zwischen der oder den Speicherzellen und den Wänden des Kondensators erstreckt.

10. Verfahren zur Verwendung einer Kühlvorrichtung (2) nach einem der vorhergehenden Ansprüche, wobei das Verfahren einen Schritt des Sprühens des dielektrischen Fluids (1) zu Etagen (106a, 106b) von Batterieelementen (103), einen Schritt des Verdampfens des dielektrischen Fluids bei Kontakt mit den Batterieelementen (103), einen Schritt des Kondensierens des dielektrischen Fluids (1) bei Kontakt mit dem Kondensator (3), einen Schritt des Sammelns des an jeder Etage (106a, 106b) kondensierten dielektrischen Fluids (1) innerhalb des Sammelbehälters (108), der für die Mehrzahl von Etagen (106a, 106b) gemeinsam ist, und einen Schritt des Rückführens des dielektrischen Fluids hin zu jedem Kreis für dielektrisches Fluid (5), mit dem eine entsprechende Etage (106a, 106b) von Batterieelementen (103) ausgerüstet ist, umfasst.

## Claims

1. Cooling device (2) for a plurality of battery elements (103) of a motor vehicle, the cooling device (2) comprising a first housing (101) and a plurality of stages (106a, 106b) of battery elements (103) disposed in the first housing, each stage (106a, 106b) of battery elements (103) being equipped with a condenser (3) provided with a coolant circuit (4), with the condenser (3) being associated with at least one dielectric fluid circuit (5) that is configured to project a dielectric fluid (1) onto the battery elements (103) of the same stage (106a, 106b) and a recovery tank (108) for the dielectric fluid (1) that is common to the plurality of stages (106a, 106b) of battery elements (103), the cooling device (2) comprising means (117) for recirculating the dielectric fluid (1) that are provided with a pump (115) and that connect the recovery tank (108) to at least one dielectric fluid inlet (23) that each of the dielectric fluid circuits (5) comprises.

2. Cooling device (2) according to Claim 1, wherein a plate is disposed in the first housing to support each of the stages of battery elements, with each plate being configured to allow gravity flow of the dielectric fluid to the recovery tank.

3. Cooling device (2) according to Claim 1 or 2, wherein at least one plate (107a) on which a stage (106a) of battery elements (103) rests is perforated with a plurality of orifices to allow the dielectric fluid (1) to filter toward the recovery tank (108).

4. Cooling device (2) according to any one of the preceding claims, wherein the dielectric fluid circuit (5) is formed in the thickness of the condenser (3).

5. Cooling device (2) according to any one of Claims 1 to 3, wherein the dielectric fluid circuit (5) is formed by a duct produced separately from the condenser and added onto a face (11b) of the condenser, which face is turned toward a chamber for receiving at least one battery element.

6. Cooling device (2) according to any one of the preceding claims, wherein the condenser (3) comprises at least one main wall (6) provided with the dielectric fluid inlet (23) as well as a coolant inlet (12a) and a coolant outlet (12b), between which the coolant circuit (4) extends, the condenser further comprising a plurality of secondary walls (9a, 9b, 9c) forming a projection from the main wall, including a first lateral secondary wall (9a) provided at a first longitudinal end of the main wall (7a), a second lateral secondary wall (9b) provided at a second longitudinal end of the main wall (7b) and an intermediate secondary wall (9c) that is interposed between the lateral secondary walls (9a, 9b), with the intermediate secondary wall helping to define, with part of the main wall and one of the lateral secondary walls, a chamber for receiving a battery element of one of the stages (106a, 106b) of battery elements (103).

7. Cooling device (2) according to any one of the preceding claims, wherein the dielectric fluid circuit (5) is equipped with a plurality of spray nozzles (37), with each spray nozzle being oriented toward one of the battery elements (103).

8. Cooling device (2) according to any one of the preceding claims, wherein each battery element (103) comprises at least one electrical storage cell (104), the one or more electrical storage cell(s) (104) being directly opposite the walls of the condenser.

9. Cooling device (2) according to any one of Claims 1 to 7, wherein each battery element (103) comprises a second housing (102) accommodating at least one electrical storage cell (104), the second housing extending between the one or more storage cell(s) and the walls of the condenser.

10. Method for implementing a cooling device (2) according to any one of the preceding claims, said method comprising a step of spraying dielectric fluid (1) toward the stages (106a, 106b) of battery elements (103), a step of evaporating dielectric fluid in contact with the battery elements (103), a step of condensing dielectric fluid (1) in contact with the condenser (3), a step of recovering dielectric fluid (1) condensed at each stage (106a, 106b) inside the recovery tank (108) common to the plurality of stages (106a, 106b) and a step of recirculating dielectric fluid to each dielectric fluid circuit (5) equipping a corresponding stage (106a, 106b) of battery elements (103).
